# EUROPEAN PATENT APPLICATION

(11) **EP 4 506 733 A1**
(43) Date of publication of application: **12.02.2025**
(21) Application number: 23811363.3
(22) Date of filing: 03.02.2023
(51) Int. Cl.: G01T 1/24, G01N 23/04

(54) **RADIATION DETECTION DEVICE, RADIATION DETECTION SYSTEM, AND RADIATION DETECTION METHOD**

(30) Priority: 25.05.2022 JP 2022085260
(71) Applicant: Hamamatsu Photonics K.K., Hamamatsu-shi, Shizuoka 435-8558 (JP)
(72) Inventor: SUZUKI Haruki, Hamamatsu-shi, Shizuoka 435-8558 (JP); KAMIYA Masahiro, Hamamatsu-shi, Shizuoka 435-8558 (JP)
(74) Representative: Grünecker Patent- und Rechtsanwälte PartG mbB
(86) International application number: PCT/JP2023/003643
(87) International publication number: WO 2023/228482

(57) **Abstract**

An X-ray detection camera determines whether or not a reset operation of performing voltage control on a detection unit such that an electric charge is not collected by the detection unit is executable based on a signal from a target object sensor that senses an inspection target object irradiated with an X-ray, and executes the reset operation in a case where the reset operation is executable.

## Description

### Technical Field

One aspect of the present invention relates to a radiation detection apparatus, a radiation detection system, and a radiation detection method.

### Background Art

Hitherto, a radiation detection apparatus that detects radiation transmitted through a target object is known. In such a radiation detection apparatus, for example, the radiation transmitted through the target object is directly converted into an electric charge by a direct conversion material of a detection element, and the electric charge is collected by a pixel electrode, whereby the radiation is detected and a radiation captured image is obtained. Here, in such a radiation detection apparatus, when the detection element is continuously irradiated with the radiation, a polarization phenomenon (polarization) occurs in the detection element, and the radiation captured image may deteriorate. Therefore, it is required to eliminate the polarization phenomenon in the detection element.

In a radiation detection apparatus described in Patent Literature 1, the polarization phenomenon in the radiation detection apparatus is eliminated by turning on/off a high voltage (HV) supplied from a HV power supply apparatus to the radiation detection apparatus at a predetermined cycle.

In a pair of radiation detection apparatuses described in Patent Literature 2, when a bias voltage is supplied from a bias power supply to the radiation detection apparatus configuring one array, a supply destination of the bias voltage is switched to the radiation detection apparatus configuring the other array before the polarization phenomenon occurs in the radiation detection apparatus configuring one array, thereby suppressing the occurrence of the polarization phenomenon in the radiation detection apparatus.

In a plurality of radiation detection apparatuses described in Patent Literature 3, a bias voltage is applied such that stop periods of bias application to the respective radiation detection apparatuses do not overlap each other, thereby suppressing simultaneous occurrence of the polarization phenomenon in the plurality of radiation detection apparatuses.

### Citation List

### Patent Literature

Patent Literature 1: Japanese Unexamined Patent Publication No. 2006-513406
Patent Literature 2: Japanese Unexamined Patent Publication No. 2008-304420
Patent Literature 3: International Patent Publication No. WO 2009/122665 A

### Summary of Invention

### Technical Problem

In the above-described radiation detection apparatus, the application of the bias voltage is stopped without considering a situation outside the radiation detection apparatus in order to eliminate the polarization phenomenon in the radiation detection apparatus. Therefore, in a case where a timing at which the polarization phenomenon in the detection element is eliminated in the radiation detection apparatus overlaps a timing at which the radiation incident on the radiation detection apparatus is transmitted through the target object, there is a possibility that the radiation detection apparatus cannot detect the radiation transmitted through the target object.

One aspect of the present invention has been made in view of the above circumstances, and relates to a radiation detection apparatus, a radiation detection system, and a radiation detection method capable of suppressing occurrence of a polarization phenomenon in a detection element and more reliably detecting radiation incident on the radiation detection apparatus when the radiation is transmitted through a target object.

### Solution to Problem

(1) A radiation detection apparatus according to an aspect of the present invention includes: a detection element configured to directly convert incident radiation into an electric charge and output a result of collecting the electric charge for each of a plurality of pixel electrodes as captured image data; a voltage source configured to apply a bias voltage to the detection element; and a control unit electrically connected to the detection element and the voltage source, in which the control unit includes a determination unit configured to execute determination processing of determining whether or not a reset operation of performing voltage control on the detection element such that the electric charge is not collected by the detection element is executable, and a voltage control unit configured to control the voltage source to execute the reset operation in a case where the determination unit determines that the reset operation is executable, and the determination unit executes the determination processing based on a signal from a target object sensor that senses a target object irradiated with the radiation.
   In the radiation detection apparatus according to an aspect of the present invention, it is determined whether or not the reset operation of performing the voltage control on the detection element such that the electric charge is not collected by the detection element is executable based on the signal from the target object sensor that senses the target object irradiated with the radiation. With such a configuration, it is determined whether or not the reset operation is executable in consideration of a result of sensing the target object by the target object sensor. As a result, for example, the reset operation can be executed at a timing when the target object is not present, and the voltage control can be performed on the detection element such that the electric charge is collected by the detection element at a timing when the target object is present. As a result, occurrence of a polarization phenomenon in the detection element can be suppressed, and the radiation incident on the radiation detection apparatus can be more reliably detected in a case where the radiation is transmitted through the target object.
(2) In the radiation detection apparatus according to (1), the determination unit may determine that the reset operation is executable in a case where it is determined that the target object has not been sensed based on the signal from the target object sensor in the determination processing. With such a configuration, the reset operation is executed at a timing when the target object is not present, and for example, the voltage control can be performed on the detection element such that the electric charge is collected by the detection element at a timing when the target object is present. As a result, the occurrence of the polarization phenomenon in the detection element can be suppressed, and the radiation incident on the radiation detection apparatus can be more reliably detected in a case where the radiation is transmitted through the target object.
(3) The radiation detection apparatus according to (1) or (2) may further include a signal input unit configured to receive an input of the signal from the target object sensor. With such a configuration, it is possible to reliably receive the signal from the target object sensor provided outside the radiation detection apparatus and appropriately perform control based on the signal.
(4) The radiation detection apparatus according to (1) or (2) may further include the target object sensor. With such a configuration, the above-described control can be appropriately performed based on a signal from the target object sensor provided as an internal component.
(5) In the radiation detection apparatus according to (4), the target object sensor may be provided on the same substrate as the detection element. With such a configuration, it is possible to suppress an increase in size of the apparatus.
(6) In the radiation detection apparatus according to (1) to (5), the determination unit may not execute the determination processing until a predetermined period, which is a period in which the reset operation is unnecessary, elapses after the reset operation is executed, and may execute the determination processing in a case where the predetermined period has elapsed. With such a configuration, it is possible to suppress the execution of the reset operation until it is necessary to eliminate the polarization phenomenon again in the radiation detection apparatus after the reset operation is executed. As a result, the radiation detection apparatus can be operated more efficiently.
(7) In the radiation detection apparatus according to (1) to (6), the detection element may be operated based on a reference clock, and the determination unit may count the reference clock to determine whether or not the predetermined period has elapsed. With such a configuration, it is possible to more accurately determine whether or not the predetermined time has elapsed based on the reference clock. As a result, it is possible to more reliably suppress the execution of the reset operation until it is necessary to eliminate the polarization phenomenon again in the radiation detection apparatus after the reset operation is executed.
(8) In the radiation detection apparatus according to (1) to (7), the reset operation may be one of an operation of stopping application of a voltage to the detection element and an operation of applying a reverse bias voltage to the detection element. With such a configuration, the polarization phenomenon in the radiation detection apparatus can be more reliably eliminated.
(9) A radiation detection system according to an aspect of the present invention includes: the radiation detection apparatus according to (1) to (8); a light source configured to emit the radiation; and a conveyance apparatus configured to convey the target object such that the target object passes through an irradiation region of the radiation. In such a radiation detection system, for example, in a situation where the conveyance apparatus sequentially conveys a plurality of target objects, the radiation emitted from the light source is transmitted through the target object, so that, for example, the reset operation can be executed at a timing when the target object is not present, and the voltage control can be performed on the detection element such that the electric charge is collected by the detection element at a timing when the target object is present. As a result, the occurrence of the polarization phenomenon in the detection element can be suppressed, and the radiation incident on the radiation detection apparatus can be more reliably detected in a case where the radiation is transmitted through the target object.
(10) The radiation detection system according to (9) may further include the target object sensor. With such a configuration, the above-described control can be appropriately performed based on a signal from the target object sensor provided as an internal component.
(11) A radiation detection method according to an aspect of the present invention includes: a voltage application step of applying a bias voltage to a detection element configured to directly convert incident radiation into an electric charge and output a result of collecting the electric charge for each of a plurality of pixel electrodes as captured image data; an acquisition step of acquiring a signal from a target object sensor configured to sense a target object irradiated with the radiation; a determination step of determining whether or not a reset operation of performing voltage control on the detection element such that the electric charge is not collected by the detection element is executable based on the signal from the target object sensor; and a reset step of executing the reset operation in a case where it is determined in the determination step that the reset operation is executable. With such a configuration, for example, the reset operation can be executed at a timing when the target object is not present, and the voltage control can be performed on the detection element such that the electric charge is collected by the detection element at a timing when the target object is present. As a result, the occurrence of the polarization phenomenon in the detection element can be suppressed, and the radiation incident on the radiation detection apparatus can be more reliably detected in a case where the radiation is transmitted through the target object.
(12) A radiation detection apparatus according to an aspect of the present invention includes: a detection element configured to directly convert incident radiation into an electric charge and output a result of collecting the electric charge for each of a plurality of pixel electrodes as captured image data; a voltage source configured to apply a bias voltage to the detection element; and a control unit electrically connected to the detection element and the voltage source, in which the control unit includes a determination unit configured to execute determination processing of determining whether or not a reset operation of performing voltage control on the detection element such that the electric charge is not collected by the detection element is executable, and a voltage control unit configured to control the voltage source to execute the reset operation in a case where the determination unit determines that the reset operation is executable, and the determination unit executes the determination processing based on sequence data which is repetition of an imaging period and a non-imaging period set in advance. With such a configuration, it is determined whether or not the reset operation is executable in consideration of the sequence data which is repetition of the imaging period and the non-imaging period set in advance. As a result, for example, the reset operation can be executed in the non-imaging period, and the voltage control on a detection element can be performed such that the electric charge is collected by the detection element in the imaging period. As a result, the occurrence of the polarization phenomenon in the detection element can be suppressed, and the radiation incident on the radiation detection apparatus can be more reliably detected in a case where the radiation is transmitted through the target object.
(13) A radiation detection system according to an aspect of the present invention includes: the radiation detection apparatus according to (12); a light source configured to emit the radiation; and a stage configured to move the light source and the detection element relative to a target object, in which the control unit controls the stage such that the light source and the detection element move with respect to the target object at a constant speed in the imaging period, and the light source and the detection element accelerate or decelerate with respect to the target object in the non-imaging period. With such a configuration, the light source and the detection element move at a constant speed in the imaging period to appropriately perform the imaging, and the light source and the detection element accelerate or decelerate depending on a situation in the non-imaging period, so that it is possible to efficiently move the light source and the like.

### Advantageous Effects of Invention

With the radiation detection apparatus, the radiation detection system, and the radiation detection method according to one aspect of the present invention, the occurrence of the polarization phenomenon in the detection element can be suppressed and radiation incident on the radiation detection apparatus can be more reliably detected when the radiation is transmitted through a target object.

### Brief Description of Drawings

FIG. 1 is a configuration diagram of an X-ray inspection apparatus according to an embodiment.
FIG. 2 is a configuration diagram of an X-ray detection camera.
FIG. 3 is a view illustrating a configuration example of a radiation detection unit and a sensing unit.
FIG. 4 is a view illustrating a configuration example of an imaging sensor and a sensor.
FIG. 5 is a block diagram illustrating a functional configuration of a control unit.
FIG. 6 is a diagram for describing control according to a distance between inspection target objects F.
FIG. 7 is a diagram for describing an example of a reset operation.
FIG. 8 is a flowchart illustrating processing executed by the X-ray inspection apparatus.
FIG. 9 is a diagram for describing problems in an X-ray detection camera according to a comparative example.
FIG. 10 is a diagram for describing problems in the X-ray detection camera according to the comparative example.
FIG. 11 is a configuration diagram of an X-ray inspection apparatus according to a modified example.
FIG. 12 is a configuration diagram of an X-ray inspection apparatus according to a modified example.
FIG. 13 is a diagram for describing an example of a reset operation based on a signal from an external apparatus.
FIG. 14 is a diagram illustrating a sequence of an X-ray inspection apparatus according to a modified example.
FIG. 15 is a configuration diagram of an X-ray inspection apparatus according to a modified example.
FIG. 16 is a diagram for describing a configuration of a stage.
FIG. 17 is a diagram for describing an inspection method for the inspection target object.
FIG. 18 is a diagram illustrating a processing speed for each time in an X direction and a Y direction.
FIG. 19 is a configuration diagram of X-ray inspection apparatuses according to modified examples.
FIG. 20 is a configuration diagram of an X-ray inspection apparatus according to a modified example.
FIG. 21 is a configuration diagram of an X-ray inspection apparatus according to a modified example.

### Description of Embodiments

Hereinafter, an embodiment of the present invention will be described in detail with reference to the drawings. In the drawings, the same or corresponding parts are denoted by the same reference signs, and redundant description will be omitted.

### [Configuration of X-ray Inspection Apparatus]

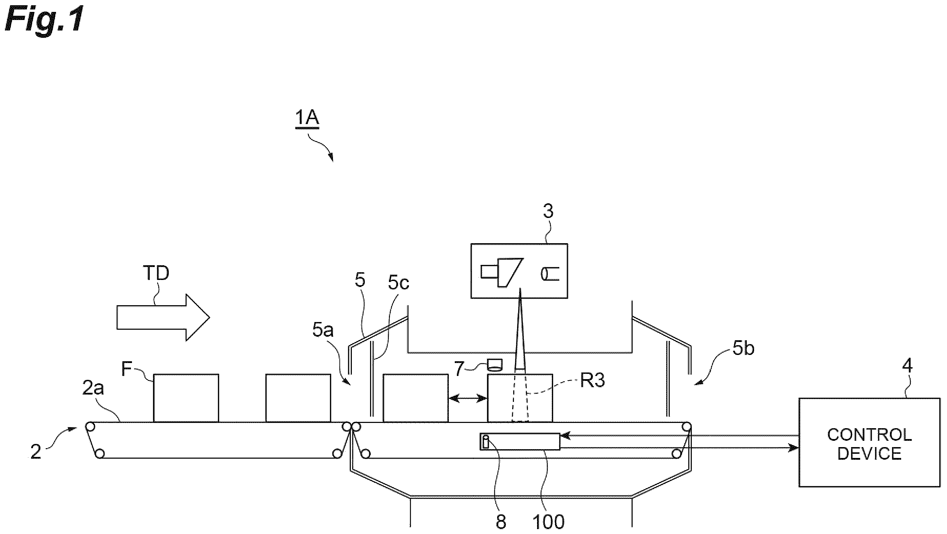

FIG. 1 is a configuration diagram of an X-ray inspection apparatus 1A which is a radiation detection system according to the present embodiment. As illustrated in FIG. 1, the X-ray inspection apparatus 1A is an apparatus that irradiates an inspection target object (target object) F conveyed in a conveyance direction TD with an X-ray (radiation) and acquires an X-ray image (captured image) obtained by imaging the inspection target object F based on the X-ray transmitted through the inspection target object F. The X-ray inspection apparatus 1A performs foreign matter inspection, weight inspection, product inspection, and the like targeting on the inspection target object F by using the X-ray image. Examples of the application of the X-ray inspection apparatus 1A include food inspection, baggage inspection, substrate inspection, battery inspection, and material inspection. The X-ray inspection apparatus 1A includes a conveyance unit (conveyance apparatus) 2 that conveys the inspection target object F, an X-ray generator (light source) 3 that emits the X-ray, an X-ray detection camera 100, a light source 7, a target object sensor 8, a control apparatus 4, and a shielding portion 5 that blocks the X-ray. Note that the radiation in the present invention is not limited to the X-ray, and includes radiation other than the X-ray, such as a γ-ray. In the present embodiment, description will be made assuming that the radiation is the X-ray.

The conveyance unit 2 conveys the inspection target object F such that the inspection target object F passes through an irradiation region R3 irradiated with the X-ray by the X-ray generator 3. The conveyance unit 2 includes a belt 2a on which the inspection target object F is placed. In the conveyance unit 2, the belt 2a moves in the conveyance direction TD, so that the inspection target object F is conveyed in the conveyance direction TD at a predetermined conveyance speed. A plurality of inspection target objects F are placed on the belt 2a at predetermined intervals. Each inspection target object F is sequentially conveyed to the irradiation region R3 as the belt 2a moves. Note that examples of the inspection target object F conveyed by the conveyance unit 2 include various articles including food such as meat, fish and shellfish, agricultural products, and confectionery, rubber products such as tires, resin products, metal products, resource materials such as minerals, wastes, electronic components, and electronic substrates.

The X-ray generator 3 is an apparatus that irradiates the inspection target object F with the X-ray (outputs the X-ray) as an X-ray source. The X-ray generator 3 is, for example, a point light source, and diffuses and emits the X-ray in a constant irradiation direction (a predetermined angular range). The X-ray generator 3 is provided such that the irradiation direction is on a conveyance unit 2 side. The X-ray generator 3 is provided above the conveyance unit 2 so as to be separated from the conveyance unit 2 by a predetermined distance. The X-ray generator 3 is provided such that the X-ray irradiation region R3 extends over the entire width direction (a direction intersecting the conveyance direction TD) of the inspection target object F. The X-ray generator 3 sets a predetermined division range in a length direction as the irradiation region R3 in the length direction (the conveyance direction TD) of the inspection target object F. In the X-ray inspection apparatus 1A, the inspection target object F is conveyed by the conveyance unit 2, and the entire inspection target object F passes through the irradiation region R3 of the X-ray generator 3, so that the inspection target object F is irradiated with the X-ray over the entire length direction. In the X-ray generator 3, for example, a tube voltage and a tube current are set by the control apparatus 4. The X-ray generator 3 irradiates the conveyance unit 2 with the X-ray having predetermined energy and radiation dose according to the set tube voltage and tube current.

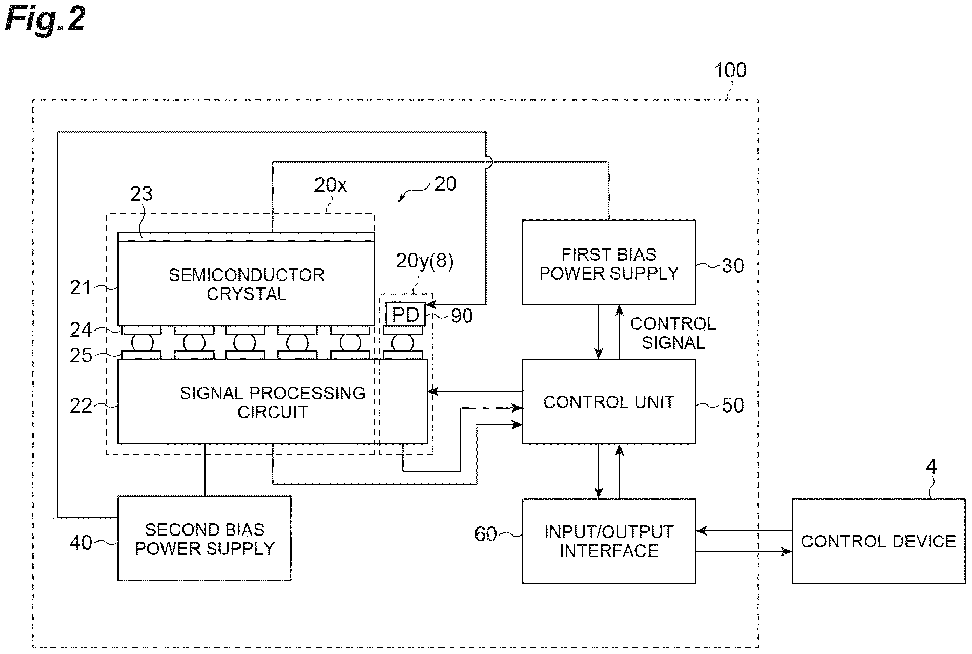

The X-ray detection camera 100 detects the X-ray transmitted through at least the conveyance unit 2 among the X-rays emitted toward the conveyance unit 2 by the X-ray generator 3, and outputs the X-ray image based on the X-ray. The X-ray detection camera (radiation detection apparatus) 100 is, for example, an X-ray flat panel sensor or an X-ray line sensor camera, and includes a radiation detection unit (detection element) 20x (see FIG. 2) including at least one row of pixel lines in which a plurality of pixels are arranged in a pixel arrangement direction. The radiation detection unit 20x is a direct conversion type radiation detection element that directly converts an incident X-ray into an electric charge. The X-ray detection camera 100 generates the X-ray image based on the detected X-ray, and outputs the generated X-ray image to the control apparatus 4. Note that the radiation detection unit 20x of the X-ray detection camera 100 may be a one-dimensional sensor (single-line sensor) in which one pixel line is provided, or may be a two-dimensional sensor including a plurality of pixel lines. The two-dimensional sensor may be an area scanning type two-dimensional sensor. Furthermore, a line scanning type two-dimensional sensor such as a multi-line sensor including a plurality of pixel lines or a time delay integration (TDI) sensor may be used.

The light source 7 irradiates the inspection target object F with light for target object sensing (outputs the light for target object sensing). It is sufficient if the light source 7 outputs light that can be sensed by the target object sensor 8, and may output visible light, infrared light, or the X-ray, for example. The light source 7 is provided above the conveyance unit 2, for example. Note that, in the present embodiment, the target object sensor 8 senses the light output from the light source 7 and transmitted through the inspection target object F, and thus, the light source 7 is provided on an opposite side of the inspection target object F from the target object sensor 8 (that is, above the conveyance unit 2). However, in a case where the target object sensor 8 senses the light output from the light source 7 and reflected by the inspection target object F, the light source 7 may be provided below the conveyance unit 2 similarly to the target object sensor 8. The light source 7 and the target object sensor 8 are not limited to be installed in a vertical direction, and may be installed in a horizontal direction. When the light source 7 and the target object sensor 8 are installed in the horizontal direction, the light source 7 and the target object sensor 8 may be installed in the width direction (a direction intersecting the conveyance direction TD) of the inspection target object F, in the length direction (the conveyance direction TD) of the inspection target object F, or in an oblique direction including the width direction and the length direction. Furthermore, a member that reflects light, such as a mirror, may be provided between the light source 7 and the target object sensor 8. The light source 7 and the target object sensor 8 may be integrated with each other.

The target object sensor 8 is a sensor that senses the inspection target object F. The target object sensor 8 senses the inspection target object F by sensing the light output from the light source 7. In the present embodiment, it is described that the target object sensor 8 senses the light transmitted through the inspection target object F, but the target object sensor 8 may sense light reflected by the inspection target object F. A specific configuration example of the target object sensor 8 is described below.

The control apparatus 4 is, for example, a computer such as a personal computer (PC). The control apparatus 4 is electrically connected to the X-ray detection camera 100. The control apparatus 4 controls the X-ray detection camera 100 to repeatedly perform imaging at a predetermined detection cycle. In a case where the radiation detection unit 20x of the X-ray detection camera 100 includes a plurality of pixel lines, the control apparatus 4 sets the predetermined detection cycle such that each of the plurality of pixel lines can image the X-ray transmitted through the same region of the inspection target object F. The control apparatus 4 generates an X-ray image based on the X-ray image output from the X-ray detection camera 100. For example, the control apparatus 4 generates one X-ray image by connecting image data of one line output from the X-ray detection camera 100. The control apparatus 4 may generate one X-ray image by executing averaging processing or addition processing on the data output from the X-ray detection camera 100. Note that the control apparatus 4 may be an apparatus independently provided outside the X-ray detection camera 100 or may be integrated inside the X-ray detection camera 100.

The predetermined detection cycle may be set based on, for example, at least one of a distance between the plurality of pixel lines of the radiation detection unit 20x, a distance between the X-ray generator 3 and the inspection target object F on the conveyance unit 2 (focus object distance (FOD)), or a distance between the X-ray generator 3 and the radiation detection unit 20x (focus detector distance (FDD)). In addition, the predetermined detection cycle may be individually set based on a pixel width in a direction orthogonal to the pixel arrangement direction of the pixels constituting the pixel line of the radiation detection unit 20x. In this case, a deviation (delay time) of the detection cycle between the plurality of pixel lines may be specified according to the distance between the plurality of pixel lines, the conveyance speed of the conveyance unit 2, the distance (FOD) between the X-ray generator 3 and the inspection target object F on the conveyance unit 2, and the distance (FDD) between the X-ray generator 3 and the radiation detection unit 20x, and the individual cycles may be respectively set.

The shielding portion 5 prevents the X-ray emitted from the X-ray generator 3 from leaking to the outside of the X-ray inspection apparatus 1A. The shielding portion 5 is provided so as to surround the periphery of the irradiation region R3 of the X-ray generator 3. The shielding portion 5 has a carry-in port 5a and a carry-out port 5b through which the conveyance unit 2 and the inspection target object F conveyed by the conveyance unit 2 pass. The carry-in port 5a is formed upstream of the irradiation region R3 of the X-ray generator 3 in the conveyance unit 2. The carry-out port 5b is formed downstream of the irradiation region R3 of the X-ray generator 3 in the conveyance unit 2. In the X-ray inspection apparatus 1A, the inspection target object F conveyed by the conveyance unit 2 passes through the carry-in port 5a, the irradiation region R3 of the X-ray generator 3, and the carry-out port 5b in this order. A shielding curtain 5c is provided between the irradiation region R3 and regions of the carry-in port 5a and the carry-out port 5b so as to partition the irradiation region R3 and the regions of the carry-in port 5a and the carry-out port 5b, and suppresses the X-ray from leaking to the outside of the X-ray inspection apparatus 1A.

[Configuration of X-ray Detection Camera] FIG. 2 is a configuration diagram of the X-ray detection camera 100. As illustrated in FIG. 2, the X-ray detection camera 100 includes a detection unit 20, a first bias power supply 30 (voltage source), a second bias power supply 40, a control unit 50, and an input/output interface 60.

The detection unit 20 includes the radiation detection unit 20x which is a detection element that directly converts the incident X-ray into the electric charge and outputs a result of collecting the electric charge for each of a plurality of pixel electrodes as X-ray image data (captured image data). The detection unit 20 continuously outputs the X-ray image data. The detection unit 20 is operated by the control unit 50 based on a reference clock (described below). The detection unit 20 includes a semiconductor crystal 21, a signal processing circuit 22, a first electrode 23, a plurality of second electrodes 24, and a plurality of third electrodes 25. Hereinafter, in the detection unit 20, a direction in which the semiconductor crystal 21 and the signal processing circuit 22 extend is referred to as an X direction, and a direction in which the semiconductor crystal 21 and the signal processing circuit 22 are arranged is referred to as a Y direction.

The first electrode 23 is a bias electrode provided on a surface of the semiconductor crystal 21 on a side opposite to a side facing the signal processing circuit 22. The first electrode 23 extends in the X direction which is the pixel arrangement direction, and is integrally configured without being divided. The plurality of second electrodes 24 are pixel electrodes provided on a surface of the semiconductor crystal 21 on the side facing the signal processing circuit 22 except for some second electrodes 24 (described below). The plurality of second electrodes 24 are arranged in the X direction. The plurality of third electrodes 25 are pixel electrodes provided on a surface of the signal processing circuit 22 on a side facing the semiconductor crystal 21. The plurality of third electrodes 25 are arranged in the X direction. Each of the third electrodes 25 corresponds to each of the second electrodes 24 (each of the third electrodes 25 and each of the second electrodes 24 are arranged to face each other in the Y direction), and is electrically connected to the corresponding second electrode 24.

The semiconductor crystal 21 is a semiconductor crystal that directly converts the incident X-ray into the electric charge. The semiconductor crystal 21 is implemented by, for example, a semiconductor crystal such as cadmium telluride (Cadotel) (CdTe), zinc cadmium telluride (CdZnTe), or thallium bromide (TIBr). When a bias voltage is applied from the first bias power supply 30 to the semiconductor crystal 21, the electric charge generated in the semiconductor crystal 21 linearly advances to the second electrode 24 in the Y direction. As a result, the electric charge generated immediately above each of the second electrodes 24 reaches the second electrode 24 positioned immediately below. The electric charge that has reached the second electrode 24 is collected by the third electrode 25 corresponding to the second electrode 24.

The signal processing circuit 22 is, for example, an application specific integrated circuit (ASIC). The signal processing circuit 22 is electrically connected to the second electrode 24 via the third electrode 25. The signal processing circuit 22 is a circuit that reads an electric signal between the first electrode 23 and the second electrode 24, and generates the X-ray image data (captured image data) based on the read electric signal. The signal processing circuit 22 collects the electric charge for each of the plurality of third electrodes 25, and outputs the collected result to the control unit 50 as the X-ray image data. The signal processing circuit 22 continuously outputs the X-ray image data to the control unit 50. Note that the X-ray image data includes a digital signal obtained by converting a voltage signal detected by the signal processing circuit 22. The X-ray image data may be the X-ray image itself or information for generating the X-ray image.

The first bias power supply 30 applies the bias voltage to the radiation detection unit 20x of the detection unit 20. The first bias power supply 30 is electrically connected to the first electrode 23. The first bias power supply 30 applies the bias voltage to the semiconductor crystal 21 via the first electrode 23 according to a control signal from the control unit 50. The first bias power supply 30 applies, for example, a high voltage (HV) to the semiconductor crystal 21. The first bias power supply 30 is configured to execute a reset operation (described below) on the semiconductor crystal 21. The second bias power supply 40 is electrically connected to the signal processing circuit 22 and provides power for operating the signal processing circuit 22. The second bias power supply 40 may be a reference potential when the first bias power supply 30 applies the bias voltage. The second bias power supply 40 is electrically connected to a photodiode 90 (described below) of a sensing unit 20y, and may provide power for operating the photodiode 90. Note that the bias voltage (ON voltage value) to be applied to the radiation detection unit 20x of the detection unit 20 by the first bias power supply 30 may be arbitrarily set, and is, for example, -1000 V.

The control unit 50 is electrically connected to the signal processing circuit 22 and the first bias power supply 30. The control unit 50 is implemented by, for example, a field-programmable gate array (FPGA). The control unit 50 controls the detection unit 20 by controlling the signal processing circuit 22 and the first bias power supply 30 based on the reference clock input from the outside of the X-ray detection camera 100. Furthermore, the control unit 50 may control the detection unit 20 by controlling the signal processing circuit 22 and the first bias power supply 30 based on the reference clock generated in the X-ray detection camera 100. According to any of these, the control unit 50 outputs a control signal for operating the signal processing circuit 22 to the signal processing circuit 22. The control unit 50 acquires the X-ray image data output from the signal processing circuit 22, and outputs the X-ray image data to the outside of the X-ray detection camera 100. For example, the control unit 50 outputs the X-ray image to the control apparatus 4 via the input/output interface 60. The control unit 50 outputs the control signal for operating the first bias power supply 30 to the first bias power supply 30. Furthermore, the control unit 50 may acquire a control signal from the control apparatus 4 via the input/output interface 60. Note that in a case where the X-ray image data is the information for generating the X-ray image, the control unit 50 may generate the X-ray image based on the acquired X-ray image data.

Here, as illustrated in FIG. 2, some of the plurality of second electrodes 24 described above is connected not to the semiconductor crystal 21 but to another photodetector (here, the photodiode 90 as an example). The photodiode 90 detects the light emitted from the light source 7. The second electrode 24 connected to the photodiode 90 is electrically connected to the signal processing circuit 22 via the third electrode 25. The signal processing circuit 22 outputs a signal corresponding to a detection result of the photodiode 90 to the control unit 50 based on the read electric signal. Such components (the photodiode 90, the second electrode 24 connected to the photodiode 90, the third electrode 25 electrically connected to the second electrode 24, and the signal processing circuit 22) related to the output of the detection result of the photodiode 90 function as the sensing unit 20y related to sensing of the inspection target object F. A case where the inspection target object F is sensed by the sensing unit 20y is a case where the inspection target object F is present in the irradiation region R3 of the X-ray generator 3. The sensing unit 20y is an example of the target object sensor 8 described above. In this case, the target object sensor 8 is provided on the same substrate as the detection unit 20. In the detection unit 20, a component related to the generation of the X-ray image data is the radiation detection unit 20x, and a component related to the sensing of the inspection target object F is the sensing unit 20y. The radiation detection unit 20x and the sensing unit 20y may or do not have to have sensitivity in the same wavelength/energy band. The light (signal) detected by the radiation detection unit 20x may be a reflected image or a transmitted image.

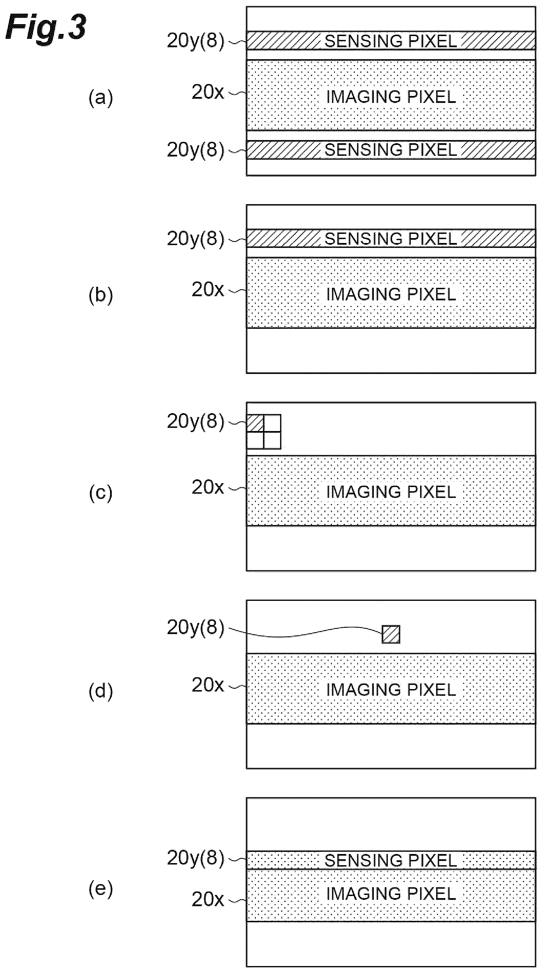

FIG. 3 is a diagram illustrating a configuration example of the radiation detection unit 20x and the sensing unit 20y (the target object sensor 8), and is plan views of the radiation detection unit 20x and the sensing unit 20y. In FIGS. 3(a) to 3(e), the vertical direction is the conveyance direction of the inspection target object F. As illustrated in FIG. 3(a), the sensing units 20y may be provided line by line so as to sandwich the radiation detection unit 20x in the conveyance direction. In this case, for example, the sensing units 20y that sense the inspection target object F can be provided for both forward conveyance and reverse conveyance of the inspection target object F.

As illustrated in FIG. 3(b), one sensing unit 20y may be provided on only one side of the radiation detection unit 20x in the conveyance direction. Furthermore, as illustrated in FIG. 3(c), the sensing unit 20y may be provided for one pixel instead of one line. The sensing unit 20y may be provided in a plurality of stages and be capable of TDI addition as a countermeasure for a low-dose condition. In addition, a position of the sensing unit 20y may be an end portion as illustrated in FIG. 3(c), may be a central portion as illustrated in FIG. 3(d), or may be any region. In addition, the sensing unit 20y may be adjacent to the radiation detection unit 20x or may be separated from the radiation detection unit 20x. Further, a part of the radiation detection unit 20x may also serve as the sensing unit 20y as illustrated in FIG. 3(e).

Note that the configuration of the target object sensor 8 is not limited to the example of the sensing unit 20y described above. The target object sensor 8 may be implemented not by the pixel (the sensing unit 20y) in the detection unit 20 as described above but by a sensor 80 which is a sensor different from the detection unit 20. The sensor 80 is a sensor that detects the light emitted from the light source 7, and may be, for example, a camera equipped with a photoelectric sensor such as a photodiode. The sensor 80 may or does not have to have sensitivity in the same wavelength/energy band as the detection unit 20 (imaging sensor) related to the generation of the X-ray image data. The light (signal) detected by the sensor 80 may be a reflected image or a transmitted image.

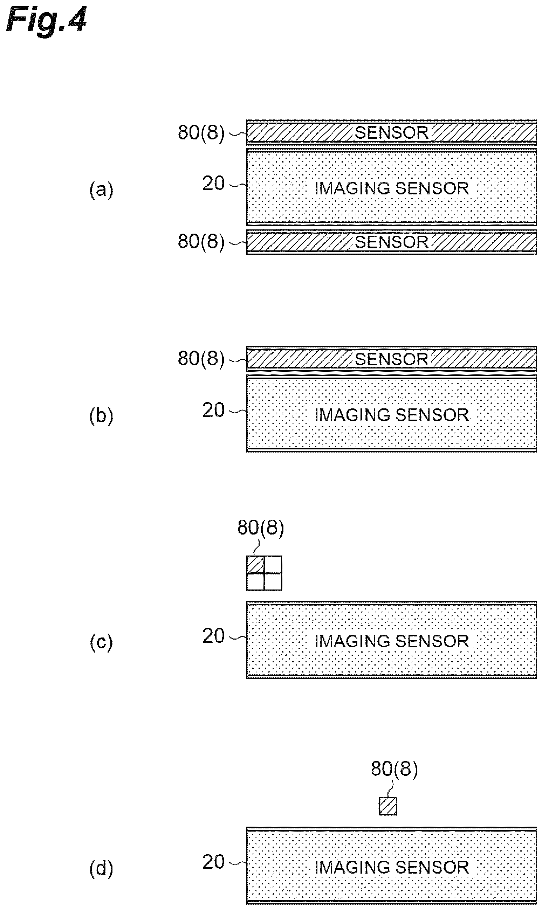

FIG. 4 is a diagram illustrating a configuration example of the detection unit 20 and the sensor 80, which are imaging sensors, and is plan views of the detection unit 20 and the sensor 80. Note that, in FIG. 4, the detection unit 20 is illustrated as an "imaging sensor". In FIGS. 4(a) to 4(d), the vertical direction is the conveyance direction of the inspection target object F. As illustrated in FIG. 4(a), the sensors 80 may be provided line by line so as to sandwich the detection unit 20 in the conveyance direction. In this case, for example, the sensor 80 that senses the inspection target object F can be provided for both the forward conveyance and the reverse conveyance of the inspection target object F.

As illustrated in FIG. 4(b), one sensor 80 may be provided on only one side of the detection unit 20 in the conveyance direction. As illustrated in FIG. 4(c), the sensor 80 may be provided for one pixel instead of one line. The sensor 80 may be provided in a plurality of stages and be capable of TDI addition as a countermeasure for a low-dose condition. In addition, a position of the sensor 80 may be an end portion as illustrated in FIG. 4(c), may be a central portion as illustrated in FIG. 4(d), or may be any region. Hereinafter, the target object sensor 8 will be described as being implemented by the sensing unit 20y as illustrated in FIG. 2.

### [Functional Configuration of Control Unit]

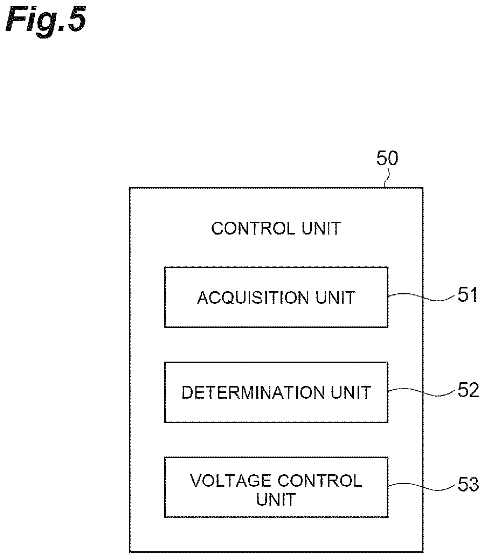

FIG. 5 is a block diagram illustrating a functional configuration of the control unit 50. As illustrated in FIG. 5, the control unit 50 includes an acquisition unit 51, a determination unit 52, and a voltage control unit 53. Hereinafter, each functional unit of the control unit 50 will be specifically described. The control unit 50 determines the presence or absence of the inspection target object F and controls application of the high voltage (HV) by the first bias power supply 30 according to the determination result.

The acquisition unit 51 acquires the control signal for controlling imaging in the X-ray detection camera 100 from the control apparatus 4. The acquisition unit 51 may acquire the control signal generated by the control unit 50 based on the reference clock generated in the X-ray detection camera 100. The acquisition unit 51 outputs the acquired control signal to the signal processing circuit 22 or the first bias power supply 30. The acquisition unit 51 acquires the X-ray image data from the signal processing circuit 22. The acquisition unit 51 outputs the X-ray image to the control apparatus 4. The acquisition unit 51 acquires a signal from the sensing unit 20y implementing the target object sensor 8 via the signal processing circuit 22. The signal is a signal corresponding to the detection result of the photodiode 90, and is a signal related to the sensing of the inspection target object F. The acquisition unit 51 outputs the signal from the sensing unit 20y to the determination unit 52.

The determination unit 52 executes predetermined determination processing based on the signal acquired by the acquisition unit 51 from the sensing unit 20y (the signal from the target object sensor 8 that senses the inspection target object F irradiated with the X-ray). The determination processing here is processing of determining whether or not the reset operation is executable.

The reset operation is an operation for eliminating a change in an internal electric field, which is a polarization phenomenon (polarization) occurring inside the semiconductor crystal 21 when the semiconductor crystal 21 is continuously irradiated with the X-ray. Specifically, the reset operation is an operation of performing voltage control on the detection unit 20 such that the electric charge is not collected in the semiconductor crystal 21. For example, the reset operation may be an operation of stopping application of a voltage to the semiconductor crystal 21 itself, or may be an operation of applying a reverse bias voltage (a voltage of a reverse bias to a normally applied voltage) to the semiconductor crystal 21. Note that the voltage (OFF voltage value) applied to the detection unit 20 when the first bias power supply 30 executes the reset operation may be arbitrarily set, and may be, for example, 0 V or 10 V. In addition, a period during which the reset operation is executed may be a period necessary for recovery from the polarization phenomenon in the semiconductor crystal 21. The period during which the reset operation is executed may be, for example, a fixed value, and may be, for example, 1 millisecond. Furthermore, the period during which the reset operation is executed may be changed periodically (cyclically). For example, 1 millisecond and 2 milliseconds may be alternately set as the period during which the reset operation is executed. Note that, when the reset operation is executed, the signal processing circuit 22 cannot collect the electric charge and thus cannot generate the X-ray image data.

Specifically, the determination unit 52 determines whether or not the inspection target object F is present in the irradiation region R3 of the X-ray generator 3 based on the signal from the sensing unit 20y. For example, the determination unit 52 determines whether the light is the light transmitted through the inspection target object F or the light related to a background luminance and not transmitted through the inspection target object F based on a luminance of the light output from the light source 7, indicated in the signal from the sensing unit 20y. In a case where the light output from the light source 7 is transmitted through the inspection target object F, the determination unit 52 determines that the inspection target object F is present in the irradiation region R3 of the X-ray generator 3. For example, in a case where a luminance value indicated in the signal from the sensing unit 20y does not exceed a predetermined threshold, the determination unit 52 may determine that the light output from the light source 7 is transmitted through the inspection target object F (the inspection target object F is present in the irradiation region R3 of the X-ray generator 3).

For example, in a case where a configuration in which a light shielding object or a mark is provided between the plurality of inspection target objects F in the conveyance unit 2 is used, a luminance of light transmitted through the light shielding object or the like becomes low, and thus the determination unit 52 may determine that the light output from the light source 7 is transmitted through the inspection target object F (the inspection target object F is present in the irradiation region R3 of the X-ray generator 3) in a case where the luminance value indicated in the signal from the sensing unit 20y does not exceed the predetermined threshold.

In a case where it is determined that the inspection target object F has not been sensed (the inspection target object F is not present in the irradiation region R3 of the X-ray generator 3) based on the signal from the sensing unit 20y in the determination processing, the determination unit 52 determines that the reset operation is executable. That is, the determination unit 52 determines that the reset operation is executable in a case where the inspection target object F is not present and imaging of the inspection target object F is not affected. The determination unit 52 outputs a result of the execution of the determination processing to the voltage control unit 53.

In a case where the reset operation is executed by the voltage control unit 53, the determination unit 52 does not have to execute new determination processing until a predetermined period elapses thereafter. In this case, the determination unit 52 executes new determination processing in a case where the predetermined period has elapsed. The predetermined period is a period in which the reset operation is unnecessary. The period in which the reset operation is unnecessary is a period in which the above-described polarization phenomenon does not become a problem after the reset operation. As described above, the X-ray image data cannot be generated during the reset operation. Therefore, it is preferable that the reset operation is executed to the minimum necessary. The X-ray image data can be more appropriately generated by appropriately setting and managing the period in which the reset operation is unnecessary. The determination unit 52 may determine whether or not the predetermined period has elapsed by counting the reference clock. In this case, the determination unit 52 may start to execute the determination processing when it is determined that the predetermined period has elapsed.

The determination unit 52 may manage the predetermined period (the period during which the reset operation is unnecessary) by setting a flag. The flag here is that which records that the reset operation has been executed. For example, the determination unit 52 may set the flag (flag: 1) when the reset operation is executed, and may release the flag (flag: 0), for example, when imaging of a new inspection target object F is started (a timing when a luminance value of the X-ray image falls below a predetermined threshold). With such flag management, it is possible to implement control such that the reset operation is executed while the flag is set.

Furthermore, the determination unit 52 may determine whether or not to execute the determination processing based on a trigger other than the elapse of the predetermined period and the flag described above. For example, the determination unit 52 may not execute the determination processing until a change amount of the luminance value of the light output from the light source 7 indicated by the signal from the sensing unit 20y exceeds a predetermined threshold after the reset operation is executed, and may execute the determination processing in a case where the change amount of the luminance value exceeds the predetermined threshold. The determination unit 52 may not execute the determination processing until a rising edge is sensed for a change of the luminance value described above after the reset operation is executed, and may execute the determination processing in a case where the rising edge is sensed. Furthermore, the determination unit 52 may execute the determination processing when a falling edge is sensed.

The rising edge is a portion where the luminance value rises (increases) sharply in a graph in which the vertical axis represents the luminance value and the horizontal axis represents time. In the rising edge, the change amount of the luminance value within a minute time exceeds the predetermined threshold. The minute time is a time sufficiently shorter than a time required for the inspection target object F to pass immediately above the X-ray detection camera 100. The falling edge is a portion where the luminance value falls (decreases) sharply in the graph.

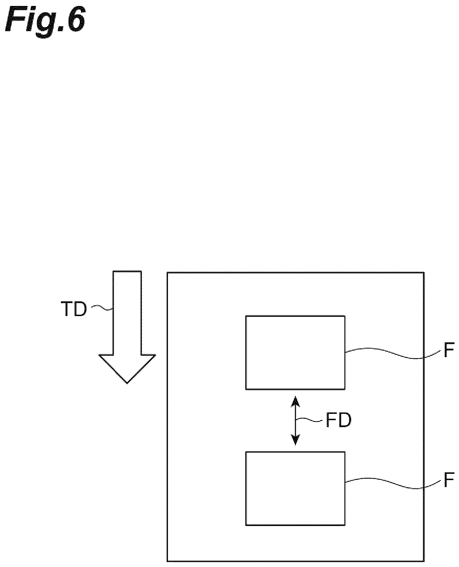

In a case where the determination unit 52 determines that the reset operation is executable, the voltage control unit 53 controls the first bias power supply 30 to execute the reset operation. Note that an arbitrary delay time may be provided between the determination processing by the determination unit 52 and the execution of the reset operation by the voltage control unit 53. The delay time is, for example, a processing time in the X-ray detection camera 100. The voltage control unit 53 may control the first bias power supply 30 to execute the reset operation only in a case where a distance FD (see FIG. 6) between the inspection target objects F specified based on the signal from the sensing unit 20y is sufficiently large for a reset operation time.

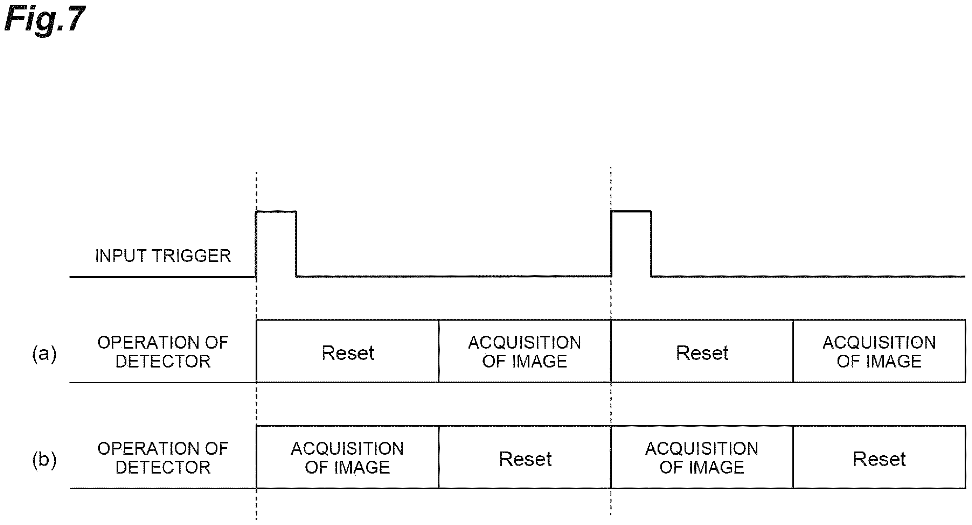

In the X-ray detection camera 100, the reset operation and imaging processing may be controlled to be automatically executed in conjunction with each other. FIG. 7 is a diagram illustrating an example of the reset operation in a case where the reset operation and the image processing are automatically executed in conjunction with each other. An input trigger here is, for example, a trigger linked to completion of the determination processing. As illustrated in FIG. 7(a), the reset operation may be controlled to be executed at a timing when the input trigger rises. In this case, when the reset operation is completed, the X-ray image may be automatically captured, and images of an arbitrary number of lines may be acquired. Furthermore, as illustrated in FIG. 7(b), the X-ray image may be captured at the timing when the input trigger rises, and the images of the arbitrary number of lines may be acquired. In this case, the reset operation may be automatically executed immediately after the X-ray image is captured.

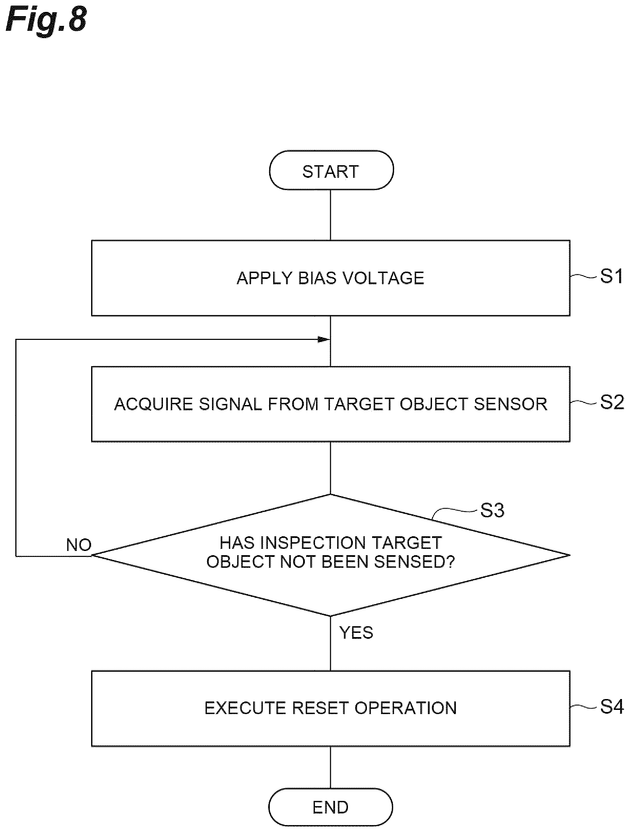

FIG. 8 is a flowchart illustrating processing for executing the reset operation of a radiation detection method executed by the X-ray inspection apparatus 1A. As illustrated in FIG. 8, first, the voltage control unit 53 controls the first bias power supply 30 to apply the bias voltage to the detection unit 20 (step S1: voltage application step). Subsequently, the acquisition unit 51 acquires the signal from the sensing unit 20y implementing the target object sensor 8 (step S2: acquisition step). Subsequently, the determination unit 52 determines whether the inspection target object F has not been sensed (that is, whether or not the reset operation is executable) based on the signal from the sensing unit 20y (step S3: determination step). In a case where it is determined that the reset operation is executable (step S3: YES), the voltage control unit 53 controls the first bias power supply 30 to execute the reset operation (step S4: reset step). In a case where it is determined that the reset operation is not executable (step S3: NO), the processing from step S2 is executed again.

In the above example, the reset operation is executed by the voltage control unit 53 in a case where the determination unit 52 determines that the inspection target object F is not present. However, for example, the first bias power supply 30 may be controlled by the voltage control unit 53 such that the high voltage is applied at a timing or period when the determination unit 52 determines that the inspection target object F is present (the sensing unit 20y senses the inspection target object F), and the reset operation may be appropriately executed in other periods.

Hereinafter, the background art and a comparative example will be described in detail, and operations and effects of the X-ray inspection apparatus 1A, the X-ray detection camera 100, and the radiation detection method according to a first embodiment will be described.

Hitherto, CdTe, CdZnTe, and the like are used as materials used for a direct conversion type radiation detection element such as a nondestructive counting detector. In such a direct conversion type radiation detection element, an electric charge generated by conversion from an X-ray can be collected in an electrode of a signal processing circuit when a high voltage (HV) is applied. However, in the direct conversion type radiation detection element, when the X-ray is continuously emitted, a change called the polarization phenomenon occurs in an internal electric field, and an X-ray image output from the radiation detection element deteriorates.

In order to prevent the deterioration of the X-ray image as described above, in the radiation detection apparatuses described in Patent Literatures 1 to 3, an application voltage is temporarily turned off for the direct conversion type radiation detection element, so that the direct conversion type radiation detection element is recovered from the polarization phenomenon.

In addition, it is conceivable to periodically turn off the application voltage in order to prevent the deterioration of the X-ray image as described above. For example, in an X-ray detection camera according to the comparative example, it is conceivable to periodically provide a period for turning off the application voltage for the direct conversion type radiation detection element (hereinafter described as "dead time") with a time obtained by multiplying an imaging cycle (line rate) of a plurality of line sensors included in the camera by the number of line sensors (the number of stages) as one cycle. Since the dead time is a time until the direct conversion type radiation detection element is recovered from the polarization phenomenon, the dead time is a time of a certain length. In addition, in the dead time, the direct conversion type radiation detection element cannot output the X-ray image.

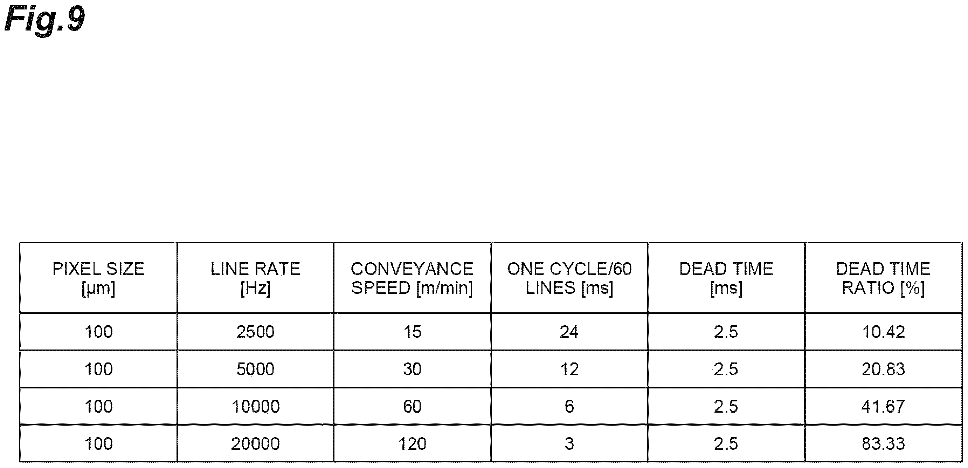

The X-ray detection camera according to the comparative example has two problems. The first problem is that, in the X-ray detection camera according to the comparative example, as a time during which the direct conversion type radiation detection element performs exposure with the X-ray (hereinafter referred to as "exposure time") becomes shorter (the line rate increases), a dead time ratio, which is a ratio of the dead time with respect to the exposure time, increases, and thus sensitivity of the direct conversion type radiation detection element is lowered. FIG. 9 is a table illustrating a change in the dead time ratio when the conveyance speed is changed. In the example illustrated in FIG. 9, 60 lines, each having a pixel size of 100 µm, are arranged. When the conveyance speed increases, the line rate increases and the exposure time per cycle decreases. At this time, the length of the dead time is constant, and thus the dead time ratio increases. As image quality (signal noise ratio (SNR)) of the X-ray detection camera depends on a dose of the X-ray to be imaged, an increase in the dead time ratio leads to degradation in the image quality of the X-ray detection camera.

In the X-ray camera according to the comparative example, it is conceivable to increase the dose of the X-ray to be incident on the X-ray detection camera while the X-ray detection camera performs imaging in order to suppress the degradation of the image quality of the X-ray detection camera due to the decrease of the dead time ratio. In this case, for example, a method of increasing the dose of the X-ray to be emitted per unit time is considered. However, considering a limit of the dose that can be emitted by the X-ray source, an allowable dose for a subject, a dose leaking from the apparatus, and the like, there is a limit to increasing the dose. Furthermore, for example, it is conceivable that the X-ray detection camera performs imaging at a lower speed. However, an inspection speed for the inspection target object decreases, and thus, convenience of a user is impaired.

The second problem is that, in the X-ray detection camera according to the comparative example, parallax between X-ray image groups subjected to addition processing occurs in an output image obtained by executing the addition processing on a plurality of X-ray images.

Normally, in the X-ray detection camera, the X-ray image is continuously output from each direct conversion type radiation detection element in a period in which the inspection target object passes through an imaging region of the camera. The output image is generated by executing the addition processing on the X-ray image. At this time, since the X-ray images from all the direct conversion type radiation detection elements are subjected to the addition processing at each position in the output image, the parallax between the X-ray image groups subjected to the addition processing does not occur.

However, in the X-ray detection camera according to the comparative example, since the application voltage to each direct conversion type radiation detection element is periodically turned off, the dead time occurs in the period in which the inspection target object passes through the imaging region of the camera. Therefore, the addition processing is executed in a state where the X-ray image that was expected to be output by each direct conversion type radiation detection element in the dead time is missing. At this time, since the X-ray images from some of the direct conversion type radiation detection elements are not subjected to the addition processing at each position in the output image, the parallax between the X-ray image groups subjected to the addition processing occurs.

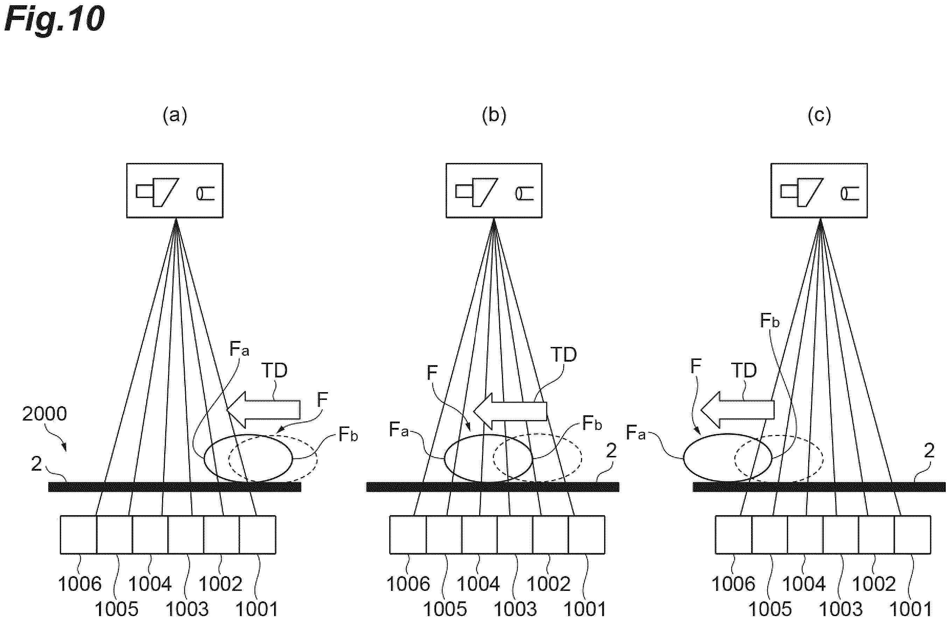

FIG. 10 is a schematic diagram illustrating the inspection target object F conveyed on a conveyance unit 2000. In FIGS. 10(a) and 10(c), each of line sensors 1001 to 1006 of an X-ray detection camera 1000 is in a state in which exposure with the X-ray can be performed to output the X-ray image, and in FIG. 10(b), each of the line sensors 1001 to 1006 is in the dead time. As described above, in a case where the imaging is cyclically turned off, in the example illustrated in FIG. 10, a front end Fa of the inspection target object F is imaged by the line sensors 1001 and 1002 in FIG. 10(a), and is imaged by the line sensor 1006 in FIG. 10(c). A back end Fb of the inspection target object F is imaged by the line sensors 1004 to 1006 in FIG. 10(c). In this case, in the output image after the addition processing, a line sensor as an output source of the X-ray image subjected to the addition processing is different between a portion in which the front end Fa appears and a portion in which the back end Fb appears. As described above, in the output image after the addition processing, the parallax between the X-ray image groups subjected to the addition processing occurs.

In contrast to the comparative example, in the X-ray detection camera 100 according to the first embodiment, it is determined whether or not the reset operation of performing the voltage control on the detection unit 20 such that the electric charge is not collected by the detection unit 20 is executable based on the signal from the target object sensor 8 that senses the inspection target object F irradiated with the X-ray. With such a configuration, it is determined whether or not the reset operation is executable in consideration of a result of sensing the inspection target object F by the target object sensor 8. As a result, for example, the reset operation can be executed at a timing when the inspection target object F is not present, and the voltage control can be performed on the detection unit 20 such that the electric charge is collected by the detection unit 20 at a timing when the inspection target object F is present. As a result, the occurrence of the polarization phenomenon in the detection unit 20 can be suppressed, and the X-ray can be more reliably detected in a case where the X-ray incident on the X-ray detection camera 100 is transmitted through the inspection target object F.

As described above, in the X-ray detection camera 100, on and off (high voltage reset) of the application of the bias voltage are appropriately controlled, so that the occurrence of the dead time in the X-ray detection camera 100 can be suppressed in the inspection of the inspection target object F, and highly sensitive inspection can be implemented. In addition, it is possible to suppress deterioration of the image quality of the X-ray image output from the X-ray detection camera 100 while maintaining the convenience of the user. Furthermore, a configuration using the X-ray detection camera 100 is not a configuration in which the imaging is cyclically turned off as in the comparative example illustrated in FIG. 9, and the imaging is continuously executed at a timing when the X-ray is transmitted through the inspection target object F, so that the occurrence of the parallax between the X-ray image groups subjected to the addition processing is suppressed in one image obtained by adding a plurality of X-ray images output from the X-ray detection camera 100.

In the X-ray detection camera 100 according to the present embodiment, the determination unit 52 may determine that the reset operation is executable in a case where it is determined that the inspection target object F has not been sensed based on the signal from the target object sensor 8 in the determination processing. With such a configuration, the reset operation is executed at a timing when the inspection target object F is not present, and for example, the voltage control can be performed on the detection unit 20 such that the electric charge is collected by the detection unit 20 at a timing when the inspection target object F is present. As a result, the occurrence of the polarization phenomenon in the detection unit 20 can be suppressed, and the X-ray can be more reliably detected in a case where the X-ray incident on the X-ray detection camera 100 is transmitted through the inspection target object F.

The X-ray detection camera 100 according to the present embodiment includes the target object sensor 8. With such a configuration, the above-described control can be appropriately performed based on a signal from the target object sensor 8 provided as an internal component.

In the X-ray detection camera 100, the target object sensor 8 is provided on the same substrate as the detection unit 20 (see FIG. 2). With such a configuration, it is possible to suppress an increase in size of the apparatus.

In the X-ray detection camera 100, the determination unit 52 may not execute the determination processing until the predetermined period, which is the period in which the reset operation is unnecessary, has elapsed after the reset operation is executed, and may execute the determination processing in a case where the predetermined period has elapsed. With such a configuration, it is possible to suppress the execution of the reset operation until it is necessary to eliminate the polarization phenomenon again in the X-ray detection camera 100 after the reset operation is executed. As a result, the X-ray detection camera 100 can be operated more efficiently.

In the X-ray detection camera 100, the detection unit 20 may be operated based on the reference clock, and the determination unit 52 may determine whether the predetermined period has elapsed by counting the reference clock. With such a configuration, it is possible to more accurately determine whether or not the predetermined time has elapsed based on the reference clock. As a result, it is possible to more reliably suppress the execution of the reset operation until it is necessary to eliminate the polarization phenomenon again in the X-ray detection camera 100 after the reset operation is executed.

In the X-ray detection camera 100, the reset operation may be one of the operation of stopping the application of the voltage to the detection unit 20 and the operation of applying the reverse bias voltage to the detection unit 20. With such a configuration, the polarization phenomenon in the X-ray detection camera 100 can be more reliably eliminated.

The X-ray inspection apparatus 1A according to the present embodiment includes the above-described X-ray detection camera 100, the X-ray generator 3 that emits the X-ray, and the conveyance unit 2 that conveys the inspection target object F such that the inspection target object F passes through the X-ray irradiation region R3. In such an X-ray inspection apparatus 1A, for example, in a situation where the conveyance unit 2 sequentially conveys a plurality of inspection target objects F, the X-ray emitted from the X-ray generator 3 is transmitted through the inspection target object F, so that, for example, the reset operation can be executed at a timing when the inspection target object F is not present, and the voltage control can be performed on the detection unit 20 such that the electric charge is collected by the detection unit 20 at a timing when the inspection target object F is present. As a result, the occurrence of the polarization phenomenon in the detection unit 20 can be suppressed, and the X-ray can be more reliably detected in a case where the X-ray incident on the X-ray detection camera 100 is transmitted through the inspection target object F.

### [Modified Examples]

Although the X-ray inspection apparatus 1A including the X-ray detection camera 100 according to the embodiment has been described above, the present invention is not limited thereto, and various modified examples can be applied.

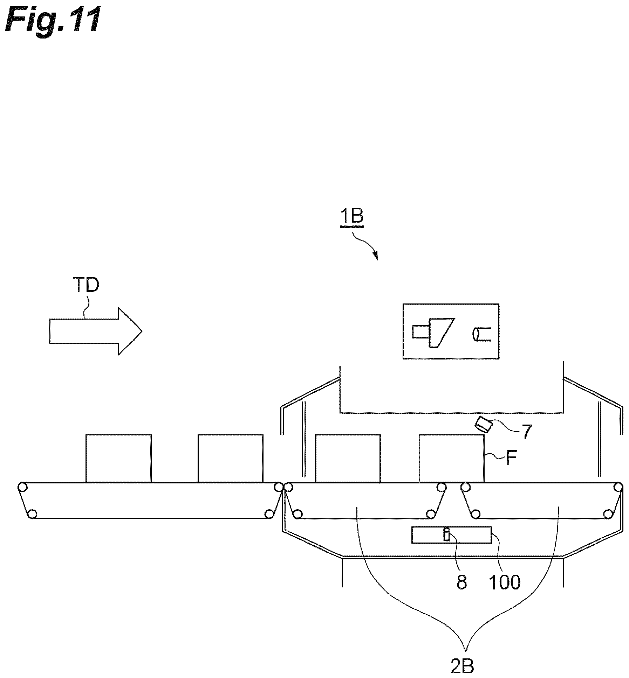

FIG. 11 is a configuration diagram of an X-ray inspection apparatus 1B according to a modified example. The X-ray inspection apparatus 1B is different from the X-ray inspection apparatus 1A in a configuration of a conveyance unit 2B (conveyance apparatus) that conveys an inspection target object F. Specifically, the conveyance unit 2B is dividedly formed so as not to be present on a line connecting a light source 7 and a target object sensor 8 (so as to form a gap). In particular, in a case where visible light or infrared light is emitted from the light source 7 and the inspection target object F is sensed by a transmitted image, the conveyance unit 2B is formed so as not to be present on the line connecting the light source 7 and the target object sensor 8, so that the inspection target object F can be sensed with high accuracy without being affected by the conveyance unit 2B.

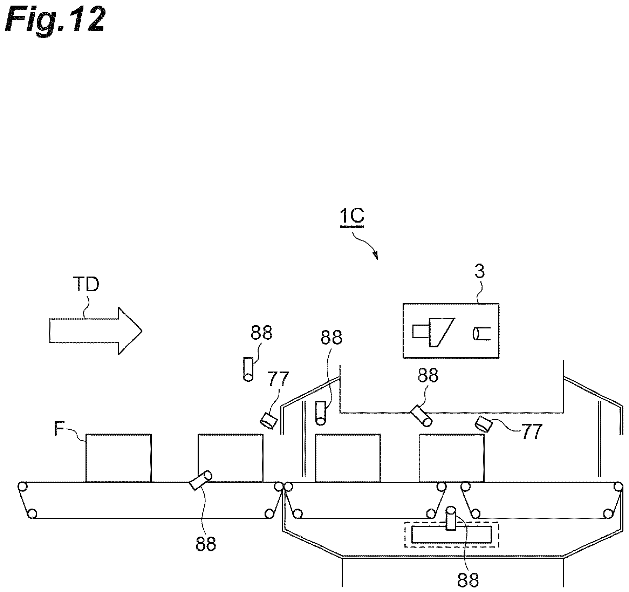

FIG. 12 is a configuration diagram of an X-ray inspection apparatus 1C according to a modified example. In the X-ray inspection apparatus 1C, an inspection target object F is sensed by a sensor 88 (an example of the target object sensor 8) provided outside an X-ray detection camera 100, and the above-described determination processing is executed based on an external signal from the sensor 88. In this case, a control unit 50 of the X-ray inspection apparatus 1C functions as a signal input unit that receives an input of the external signal from the sensor 88. Then, the control unit 50 executes the above-described determination processing based on the external signal. With such a configuration, it is possible to reliably receive a signal from the target object sensor 8 provided outside the X-ray detection camera 100 and appropriately perform control based on the signal.

In the example illustrated in FIG. 12, a plurality of light sources 77 that irradiate the inspection target object F with light for target object sensing are provided. A plurality of sensors 88 are provided as sensors that detect the light emitted from the light source 77. The plurality of sensors 88 are provided in the vicinity of a conveyance path of the inspection target object F. The sensor 88 may be, for example, a camera equipped with a photoelectric sensor such as a photodiode. The light (signal) detected by the sensor 80 may be a reflected image or a transmitted image. The light detected by the sensor 88 may be visible light, infrared light, or an X-ray image. The sensor 88 may include a weight sensor, a magnetic sensor, a laser sensor, a radio wave sensor, an ultrasonic sensor, a contact sensor, and the like other than the photoelectric sensor. Note that, as a configuration in which an external signal is acquired from a sensor provided outside, a configuration in which an external signal is acquired from an apparatus such as a weight checker, a central control apparatus (sequencer), or the like may be adopted.

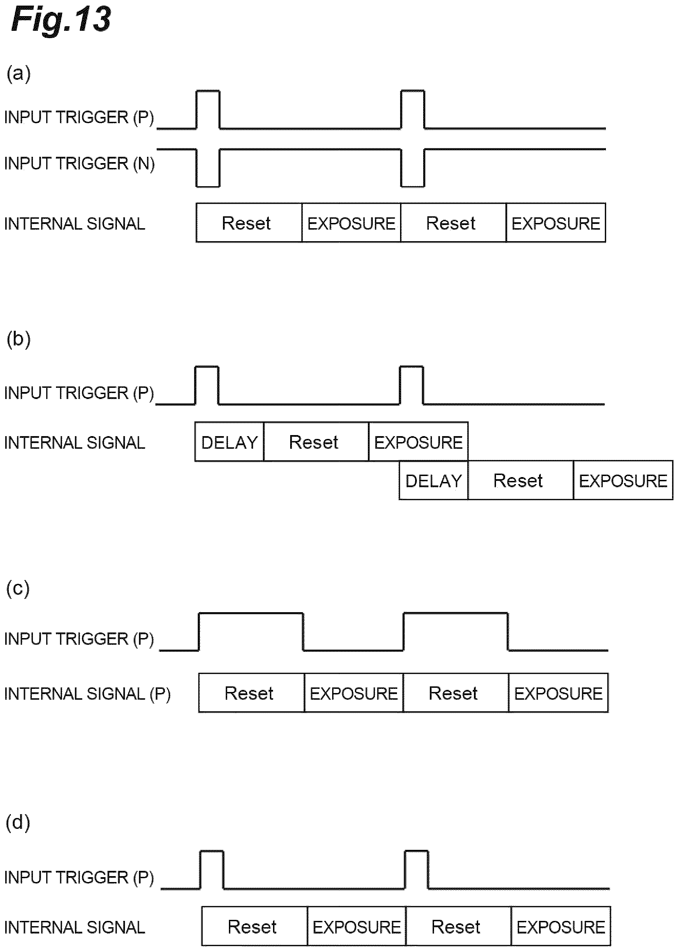

FIG. 13 is a diagram for describing an example of a reset operation based on an external signal from an external apparatus (here, the sensor 88). In FIG. 13, the horizontal axis represents time, and the vertical axis represents a state of an input trigger. Note that the input trigger here is, for example, a trigger linked to completion of the determination processing. As illustrated in FIG. 13(a), the reset operation may be executed at a timing when the input trigger rises, and when the reset operation is completed, exposure (capturing of the X-ray image) may be automatically performed to acquire images of an arbitrary number of lines. In this case, a level and polarity ("P" or "N") of the input trigger are not particularly limited.

Further, as illustrated in FIG. 13(b), an arbitrary delay time may be provided in the X-ray detection camera 100 for the input trigger, and then the reset operation may be executed. Such a delay time may be set in consideration of use of the external signal from the sensor 88, which is the external apparatus, for example.

Furthermore, as illustrated in FIG. 13(c), the reset operation and the exposure (capturing of the X-ray image) may be performed according to a high/low period of the input trigger. In the example illustrated in FIG. 13(c), the reset operation is executed in a period in which the input trigger is high, and the exposure (capturing of the X-ray image) is performed in a period in which the input trigger is Low.

Furthermore, as illustrated in FIG. 13(d), a rising edge of the input trigger is detected, and the reset operation may be executed only for a predetermined period after the rising edge is detected. The rising edge is a portion where the input trigger rises (increases) sharply in a graph as illustrated in FIG. 13. In the rising edge, a change amount of the input trigger within a minute time exceeds a predetermined threshold. Note that a reset operation time does not have to be set to a constant value, and may be set based on, for example, a table of cycles of the reset operation time provided in advance. For example, in a case where there are a period in which the inspection target object F is continuously conveyed and a period in which the inspection target object F is not continuously conveyed, control may be performed such that the reset operation time is lengthened (firmly reset) in the period in which the inspection target object F is not continuous.

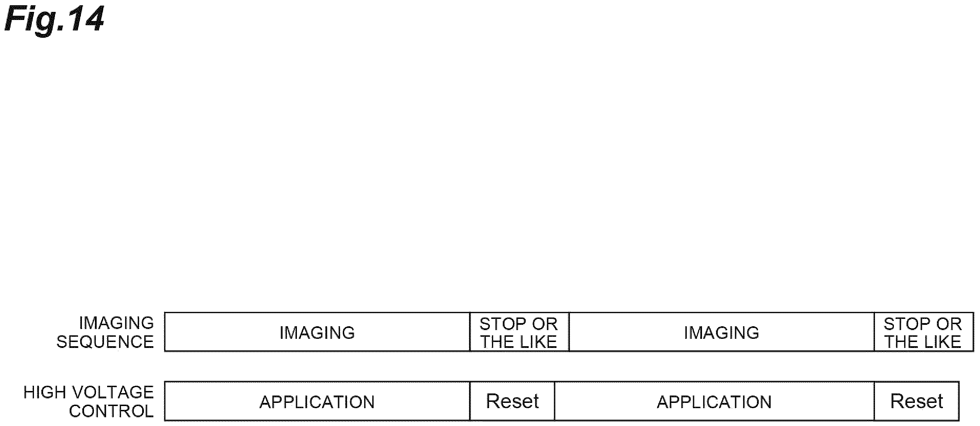

FIG. 14 is a diagram illustrating a sequence of the X-ray inspection apparatus according to the modified example. In the X-ray inspection apparatus according to the modified example, the determination unit 52 of the control unit 50 executes the determination processing based on sequence data which is repetition of an imaging period and a non-imaging period set in advance. FIG. 14 illustrates sequences of imaging and high voltage control. In FIG. 14, the horizontal axis represents time. "Imaging" in the imaging sequence of FIG. 14 indicates the imaging period, and "stop or the like" indicates the non-imaging period. In a case where such an imaging sequence is set in advance, the control unit 50 can easily and appropriately execute the reset operation by acquiring information of the imaging sequence. Note that, as illustrated in FIG. 14, the high voltage control sequence is set corresponding to the imaging sequence, a first bias power supply 30 applies a high voltage to a semiconductor crystal 21 in the imaging period, and the first bias power supply 30 executes the reset operation on the semiconductor crystal 21 in the non-imaging period.

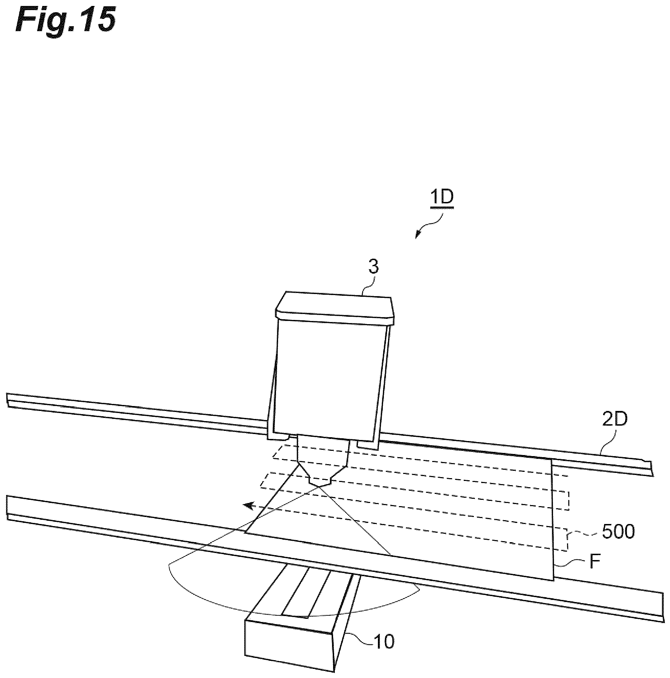

FIG. 15 is a configuration diagram of an X-ray inspection apparatus 1D that executes determination processing based on sequence data. As illustrated in FIG. 15, the X-ray inspection apparatus 1D includes an X-ray generator 3, an X-ray detection camera 100, and a conveyance unit 2D. In the X-ray inspection apparatus 1D, an inspection target object F placed on the conveyance unit 2D is irradiated with an X-ray along an irradiation line 500. In the example illustrated in FIG. 15, the foldback irradiation line 500 is set for the inspection target object F.

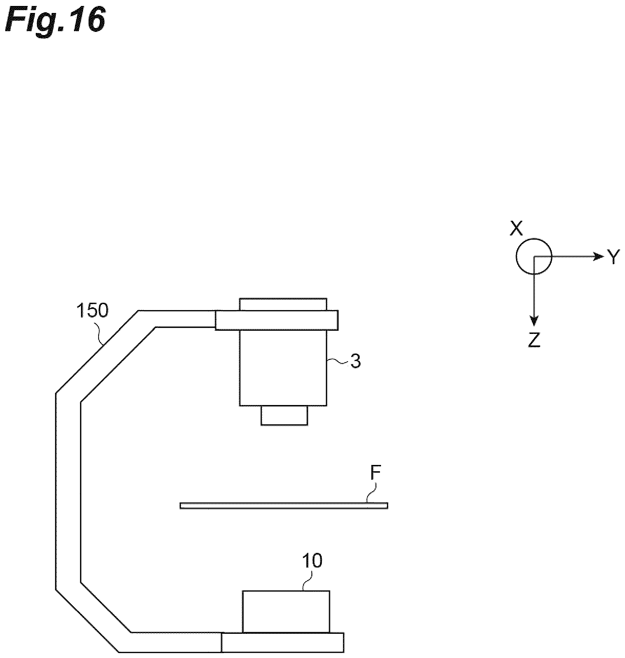

FIG. 16 is a diagram illustrating a configuration of a stage 150. The X-ray inspection apparatus 1D includes the stage 150 that moves the X-ray generator 3 and the X-ray detection camera 100 relative to the inspection target object F. The stage 150 includes an arm portion that holds both the X-ray generator 3 and the X-ray detection camera 100. In the X-ray inspection apparatus 1D, a control unit 50 controls the stage 150 to irradiate the inspection target object F with the X-ray along the foldback irradiation line 500.

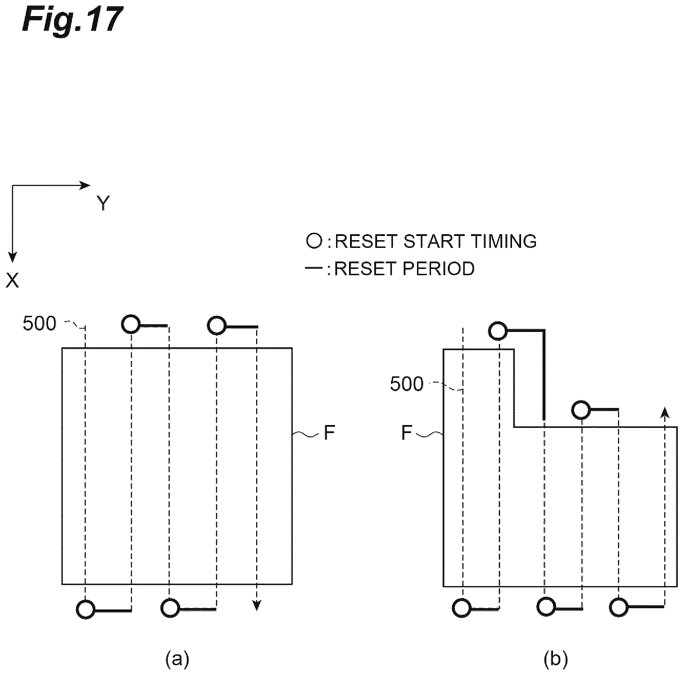

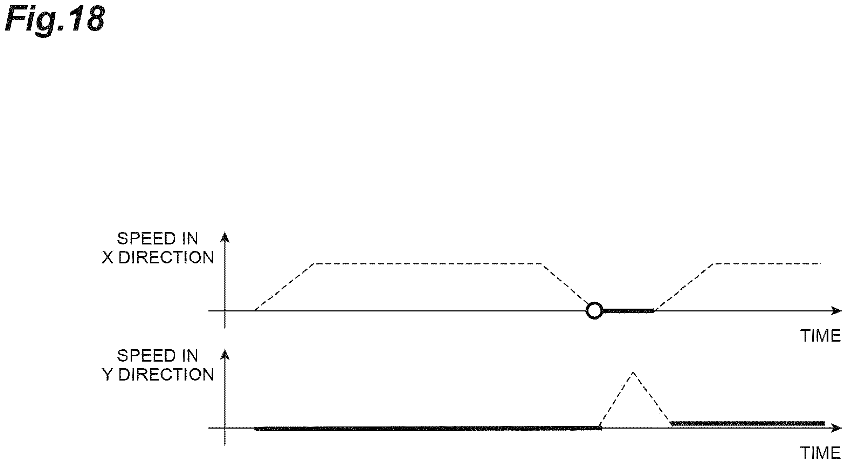

FIG. 17 is a diagram illustrating an inspection method for the inspection target object F using the X-ray inspection apparatus 1D. FIG. 18 is a diagram illustrating a movement speed for each time in the X direction and the Y direction in the inspection method. In FIG. 17, a broken line portion indicates an imaging period, a solid line portion indicates a reset period, and a circle indicates a reset start timing.

FIG. 17(a) illustrates an example in which the foldback irradiation line 500 is set for the inspection target object F having a rectangular shape in plan view. The control unit 50 controls the stage 150 such that the X-ray generator 3 and the X-ray detection camera 100 move in the X direction in the imaging period, and the X-ray generator 3 and the X-ray detection camera 100 move in the Y direction in the non-imaging period (reset period). As illustrated in FIG. 18, movement when moving in the X direction is maintained at a constant speed in a predetermined period. That is, the control unit 50 controls the stage 150 such that the X-ray generator 3 and the X-ray detection camera 100 move in the X direction at a constant speed with respect to the inspection target object F in the imaging period. In addition, as illustrated in FIG. 18, movement when moving in the Y direction is performed so as to first accelerate (accelerate with respect to the inspection target object F) and then decelerate (decelerate with respect to the inspection target object F). That is, the control unit 50 controls the stage 150 such that the X-ray generator 3 and the X-ray detection camera 100 accelerate or decelerate in the non-imaging period. It is sufficient if the stage 150 moves the X-ray generator 3 and the X-ray detection camera 100 relative to the inspection target object F. For example, the stage 150 may fix positions of the X-ray generator 3 and the X-ray detection camera 100, and the X-ray generator 3 and the X-ray detection camera 100 may move relative to the inspection target object F as the inspection target object F moves by any method.

In the example illustrated in FIG. 17(a), the X-ray generator 3 and the X-ray detection camera 100 first move in the X direction in the imaging period, move in the Y direction when the resetting is started in the non-imaging period, turn back and move in a -X direction in the imaging period, move in the Y direction when the resetting is started in the non-imaging period, turn back and move in the X direction in the imaging period, move in the Y direction when the resetting is started in the non-imaging period, turn back and move in the -X direction in the imaging period, move in the Y direction when the resetting is started in the non-imaging period, and move in the X direction finally in the imaging period.

FIG. 17(b) illustrates an example in which the foldback irradiation line 500 is set for the inspection target object F having a stepped shape in which an upper right portion of a rectangle is cut out. Since the inspection target object F having such a shape is not present at a step portion, control is performed such that the step portion is in a reset period as illustrated in FIG. 17(b).

With the X-ray inspection apparatus 1D, the reset operation can be executed in the non-imaging period, and the voltage control on a detection element can be performed such that an electric charge is collected by the X-ray detection camera 100 in the imaging period. As a result, occurrence of the polarization phenomenon in the X-ray detection camera 100 can be suppressed, and the X-ray can be more reliably detected in a case where the X-ray is transmitted through the inspection target object F.

With the above configuration, the X-ray generator 3 and the X-ray detection camera 100 move at a constant speed in the imaging period to appropriately perform the imaging, and the X-ray generator 3 and the X-ray detection camera 100 accelerate or decelerate depending on a situation in the non-imaging period, so that it is possible to efficiently move the X-ray generator 3 and the X-ray detection camera 100.

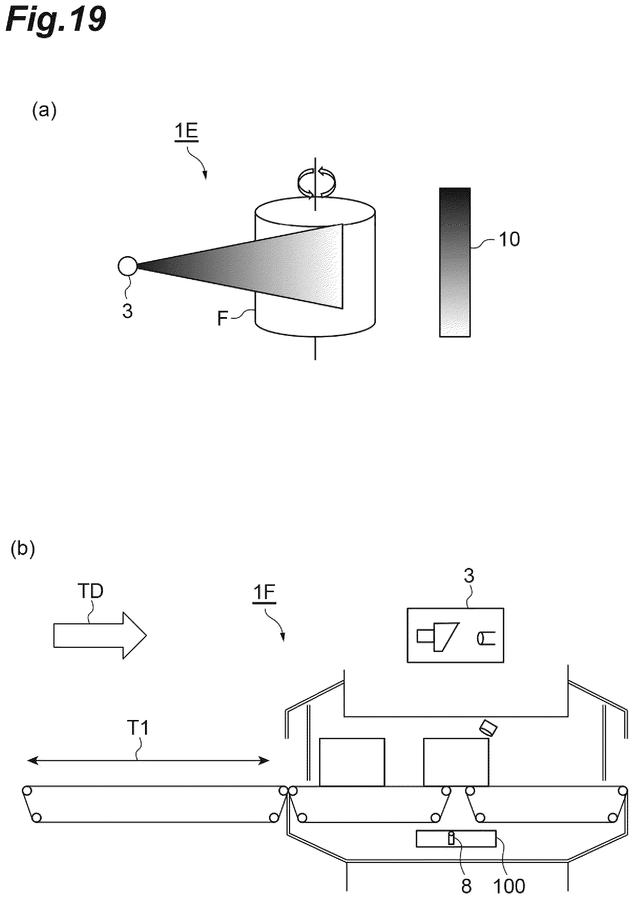

FIG. 19 is a configuration diagram of X-ray inspection apparatuses according to modified examples. For example, in an X-ray inspection apparatus 1E illustrated in FIG. 19(a), an X-ray detection camera 100 is controlled such that a rotating inspection target object F is irradiated with an X-ray from an X-ray generator 3, and a reset operation and imaging are executed at every predetermined angle. In an X-ray inspection apparatus 1F illustrated in FIG. 19(b), a section T1 in which an inspection target object F is not cyclically conveyed is set, and a reset operation is executed in a period corresponding to the section.

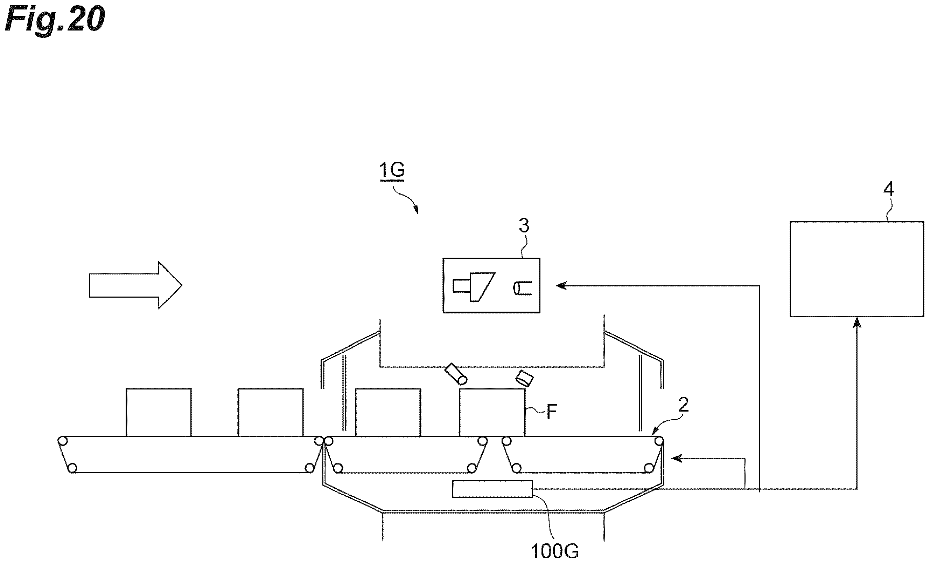

FIG. 20 is a configuration diagram of an X-ray inspection apparatus 1G according to a modified example. In the X-ray inspection apparatus 1G, in a case where a reset operation is executed by a voltage control unit 53, a control unit 50 of an X-ray detection camera 100 outputs an output signal for stopping an operation related to imaging in the X-ray inspection apparatus 1D to a conveyance unit 2, an X-ray generator 3, and a control apparatus 4.

Specifically, in a case where the reset operation is executed by a first bias power supply 30, the control unit 50 may output an output signal for controlling the conveyance unit 2 to stop conveyance to the outside of the X-ray detection camera 100, specifically, the conveyance unit 2. The control unit 50 may stop the conveyance in the conveyance unit 2 by stopping an output signal (stage drive trigger) output when the conveyance is performed in the conveyance unit 2. Furthermore, the conveyance unit 2 may be controlled by the control apparatus 4. In this case, in a case where the reset operation is executed by the first bias power supply 30, the control unit 50 outputs an output signal for requesting stop of the conveyance in the conveyance unit 2 to the control apparatus 4. Then, the control apparatus 4 receives the output signal and stops the conveyance in the conveyance unit 2.

In a case where the reset operation is executed by the first bias power supply 30, the control unit 50 may output an output signal for stopping irradiation with an X-ray by the X-ray generator 3 to the outside of the X-ray detection camera 100, specifically, to the X-ray generator 3. The control unit 50 may output an output signal (light source drive trigger) such that the X-ray generator 3 emits the X-ray. In this case, the control unit 50 may stop the output signal in a case where the reset operation is executed by the first bias power supply 30. Furthermore, the control unit 50 may transmit an output signal for requesting stop of the irradiation with the X-ray by the X-ray generator 3 to the control apparatus 4. In this case, the control apparatus 4 receives the request and controls the X-ray generator 3 so as to stop the irradiation with the X-ray.

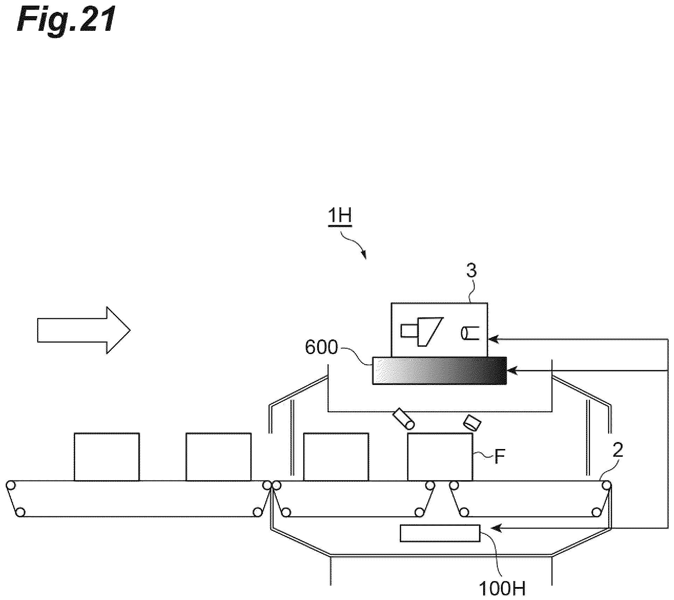

FIG. 21 is a configuration diagram of an X-ray inspection apparatus 1H according to a modified example. The X-ray inspection apparatus 1H includes a shutter 600 in addition to the configuration of the X-ray inspection apparatus 1G described above. The shutter 600 is provided immediately below an X-ray generator 3, and is configured to adjust an exposure dose of an X-ray by being opened and closed. In the X-ray inspection apparatus 1H, a control unit 50 outputs an output signal for instructing the shutter 600 to be opened and closed. The control unit 50 outputs an output signal for stopping irradiation with the X-ray by the X-ray generator 3 to the X-ray generator 3. With such a configuration, the opening and closing of the shutter 600 and the irradiation with the X-ray from the X-ray generator 3 are adjusted under the control of the control unit 50, and the exposure dose of the X-ray can be reduced. By reducing the exposure dose of the X-ray, the progress of polarization can be suppressed.

### Reference Signs List

- 1A, 1B, 1C, 1D, 1E, 1F, 1G, 1H: X-ray inspection apparatus (radiation detection system)
- 2, 2B, 2D: conveyance unit (conveyance apparatus)
- 3: X-ray generator (light source)
- 8: target object sensor
- 20x: radiation detection unit (detection element)
- 30: first bias power supply (voltage source)
- 50: control unit
- 52: determination unit
- 53: voltage control unit
- 100: X-ray detection camera (radiation detection apparatus)
- 150: stage
- F: inspection target object (target object)

## Claims

1. A radiation detection apparatus comprising:
a detection element configured to directly convert incident radiation into an electric charge and output a result of collecting the electric charge for each of a plurality of pixel electrodes as captured image data;
a voltage source configured to apply a bias voltage to the detection element; and
a control unit electrically connected to the detection element and the voltage source, wherein
the control unit includes
a determination unit configured to execute determination processing of determining whether or not a reset operation of performing voltage control on the detection element such that the electric charge is not collected by the detection element is executable, and a voltage control unit configured to control the voltage source to execute the reset operation in a case where the determination unit determines that the reset operation is executable, and
the determination unit executes
the determination processing based on a signal from a target object sensor that senses a target object irradiated with the radiation.

2. The radiation detection apparatus according to claim 1, wherein the determination unit determines that the reset operation is executable in a case where it is determined that the target object has not been sensed based on the signal from the target object sensor in the determination processing.

3. The radiation detection apparatus according to claim 1 or 2, further comprising a signal input unit configured to receive an input of the signal from the target object sensor.

4. The radiation detection apparatus according to claim 1 or 2, further comprising the target object sensor.

5. The radiation detection apparatus according to claim 4, wherein the target object sensor is provided on the same substrate as the detection element.

6. The radiation detection apparatus according to claim 1 or 2, wherein the determination unit does not execute the determination processing until a predetermined period, which is a period in which the reset operation is unnecessary, elapses after the reset operation is executed, and executes the determination processing in a case where the predetermined period has elapsed.

7. The radiation detection apparatus according to claim 6, wherein the detection element is operated based on a reference clock, and
the determination unit counts the reference clock to determine whether or not the predetermined period has elapsed.

8. The radiation detection apparatus according to claim 1 or 2, wherein the reset operation is one of an operation of stopping application of a voltage to the detection element and an operation of applying a reverse bias voltage to the detection element.

9. A radiation detection system comprising:
the radiation detection apparatus according to claim 1 or 2;
a light source configured to emit the radiation; and
a conveyance apparatus configured to convey the target object such that the target object passes through an irradiation region of the radiation.

10. The radiation detection system according to claim 9, further comprising the target object sensor.

11. A radiation detection method comprising:
a voltage application step of applying a bias voltage to a detection element configured to directly convert incident radiation into an electric charge and output a result of collecting the electric charge for each of a plurality of pixel electrodes as captured image data;
an acquisition step of acquiring a signal from a target object sensor configured to sense a target object irradiated with the radiation;
a determination step of determining whether or not a reset operation of performing voltage control on the detection element such that the electric charge is not collected by the detection element is executable based on the signal from the target object sensor; and
a reset step of executing the reset operation in a case where it is determined in the determination step that the reset operation is executable.

12. A radiation detection apparatus comprising:
a detection element configured to directly convert incident radiation into an electric charge and output a result of collecting the electric charge for each of a plurality of pixel electrodes as captured image data;
a voltage source configured to apply a bias voltage to the detection element; and
a control unit electrically connected to the detection element and the voltage source, wherein
the control unit includes
a determination unit configured to execute determination processing of determining whether or not a reset operation of performing voltage control on the detection element such that the electric charge is not collected by the detection element is executable, and
a voltage control unit configured to control the voltage source to execute the reset operation in a case where the determination unit determines that the reset operation is executable, and
the determination unit executes
the determination processing based on sequence data which is repetition of an imaging period and a non-imaging period set in advance.

13. A radiation detection system comprising:
the radiation detection apparatus according to claim 12;
a light source configured to emit the radiation; and
a stage configured to move the light source and the detection element relative to a target object,
wherein the control unit controls
the stage such that the light source and the detection element move with respect to the target object at a constant speed in the imaging period, and the light source and the detection element accelerate or decelerate with respect to the target object in the non-imaging period.
